# EUROPÄISCHE PATENTSCHRIFT

(11) **EP 1 885 469 B1**
(45) Veröffentlichungstag und Bekanntmachung des Hinweises auf die Patenterteilung: **09.06.2010**
(21) Anmeldenummer: 06724450.9
(22) Anmeldetag: 20.04.2006
(51) Int. Cl.: B01D 25/21

(54) **KAMMERFILTERPLATTE**
CHAMBER FILTER PLATE
PLAQUE DE FILTRE A CHAMBRE

(30) Priorität: 20.04.2005 DE 202005006286 U
(43) Veröffentlichungstag der Anmeldung: 13.02.2008
(73) Patentinhaber: JVK Filtration Systems GmbH, 91166 Georgensgmünd (DE)
(72) Erfinder: HERMANN, Manfred, 90491 Nürnberg (DE); SALBAUM, Bernhard, 91187 Mühlstetten (DE)
(74) Vertreter: Tergau, Enno
(86) Internationale Anmeldenummer: PCT/EP2006/003614
(87) Internationale Veröffentlichungsnummer: WO 2006/111378

(56) Entgegenhaltungen:
- EP-A- 0 579 103

## Beschreibung

Die Erfindung betrifft eine Kammerfilterplatte für eine Filterpresse. Derartige Kammerfilterplatten bestehen aus einem Plattenkörper und einem gegenüber der Plattenoberfläche des Plattenkörpers verdickten und umlaufenden Plattenrand. Der Plattenrand weist somit eine größere Dicke als der Plattenkörper auf, so dass innerhalb des Plattenrandes eine Ausnehmung gebildet ist. Reiht man zwei oder mehrere Kammerfilterplatten nebeneinander auf, stoßen sie mit ihren Rändern aneinander und bilden innerhalb der Ränder Filterkammern aus.

Zum Einbringen der zu filternden Trübe in die Filterkammern ist im Plattenkörper mindestens ein Trübeeinlauf vorgesehen. Dieser Trübeeinlauf weist üblicherweise einen seinen Rand umfassenden Stützring auf.

Die nebeneinander zur Bildung eines Filterpakets angeordneten Kammerfilterplatten liegen mit ihren Randbereichen aneinander und stützen sich so gegenseitig ab. Die innerhalb der Plattenränder gelegenen Plattenkörper weisen eine derartige Abstützung aneinander zunächst nicht auf. Es besteht deshalb die Gefahr, dass sich die Plattenkörper infolge der hohen Filterdrücke in ungewünschter Weise verformen. Um die Verformung der Plattenkörper innerhalb eines aus mehreren Kammerfilterplatten bestehenden Filterpakets zu vermindern, ist es bekannt, im Bereich der Plattenkörper Stützelemente vorzusehen. Dies sind nockenförmige Stützkörper, die aus der Plattenoberfläche des Plattenkörpers üblicherweise hinausstehen und bei geschlossenem Filterpaket gegeneinander anliegen. Besonders unerwünscht ist eine Verformung der Filterplatte im Bereich des Trübeeinlaufs.

Die EP 0 579 103 A beschreibt eine Stützstruktur für eine Filterpressplatte.Diese Stützstruktur umfasst einen Stützringe im Bereich einer Trübeeinlaufbohrung, der einen Montageflansch und sechs aus dem Montageflansch abstehende Vorsprünge aufweist. Jeder dieser Vorsprünge weist ein Senkloch zur Aufnahme einer Schlitzschraube mit Senkkopf auf. Diese Schrauben dienen zur Verspannung des Montageflansches mit einem rückseitig der Bohrung angeordneten Ring.

Der Erfindung liegt die Aufgabe zugrunde, die Stabilität der erfindungsmäßigen Kammerfilterplatte im Bereich des Trübeeinlaufs zu verbessern. Diese Aufgabe ist durch die Merkmalskombination des Anspruchs 1 in erfinderischer Weise gelöst. Die rückbezogenen Ansprüche betreffen teilweise vorteilhafte und teilweise für sich selbst erfinderische Weiterbildungen der Erfindung.

Die erfindungsmäßige Kammerfilterplatte weist einen Stützring im Bereich der Trübeeinlauföffnung mit einem gleichebig zur Plattenoberfläche verlaufenden, sich im Montageendzustand an die Plattenoberfläche anschmiegenden Montageflansch auf. Aus dem Montageflansch steht mindestens ein Vorsprung ab. Dieser Vorsprung stützt sich bei montiertem Filterpaket gegen den Stützring der jeweils benachbarten Filterplatte ab.

Der Vorsprung weist eine zur Plattenoberfläche koplanar verlaufende Abflachung auf. Auf diese Weise ist sichergestellt, dass der Vorsprung großflächig am benachbarten Stützring anliegt. Der Vorsprung kann auf diese Weise die auf ihn einwirkenden Stützkräfte gut aufnehmen und auf den benachbarten Stützring übertragen. Die erfindungsmäßige Kammerfilterplatte weist eine Dreipunktlagerung mit drei jeweils im Abstand von 120° über den Montageflansch verteilten Vor sprüngen auf, wegen der damit verbundenen gleichmäßigen Druckverteilung. Diese Anordnung kann verdoppelt sein zu einer Sechspunktlagerung mit einem Vorsprungabstand von jeweils 60°.

Der Stützring ist mit einer oder vorteilhaft mehreren Befestigungsschrauben an der Plattenoberfläche fixiert. Die Befestigungsschrauben sind hierbei als Kopfschrauben ausgebildet. Durch diese Ausbildung erfüllen die Kopfschrauben eine Doppelfunktion, nämlich zum einen die Befestigungsfunktion der Befestigungsschrauben und zum anderen die Stützfunktion der Vorsprünge. Da die Befestigungsschrauben an der Kammefilterplatte lösbar fixiert sind, können auch Befestigungsschrauben mit verschiedenen Schraubkopfhöhen eingesetzt werden. Es kann also in Anpassung an die jeweilige Filterkammer stets die Schraube mit der optimal angepassten Schraubkopfhöhe eingesetzt werden. Zugleich ist es möglich, mit dem Montageflansch und den Befestigungsschrauben das Filtertuch im Bereich des Stützrings zu befestigen und zugleich abzudichten. Infolge der Abstützung der einander benachbarten Kammerfilterplatten auch über die Schraubenköpfe entsteht jeweils ein Schlitz mit konstanter Dicke zwischen den einander benachbarten Kammerfilterplatten im Bereich der Trübeeinlauföffnung.

Nach der Lehre des Anspruchs 2 ist die Breite des Montageflansches an den Durchmesser der Schraubenköpfe angepasst.

Durch die Verwendung eines metallenen Stützrings, insbesondere eines Stahlrings nach Anspruch 3, ist die Kammerfilterplatte auch zum Auspressen mit hohen Temperaturen und hohen Differenzdrücken geeignet. Auch ist es möglich, mit Metallringen chemisch aggressive Suspensionen zu filtern und auszupressen. Die metallischen Stützringwerkstoffe sind wegen ihrer chemischen Resistenz besonders bevorzugt.

Die Anordnung der Trübeeinlauföffnung im Mittelpunkt der Plattenoberfläche nach Anspruch 4 ist wegen einer gleichmäßigen Verteilung des einzufüllenden Filtrats besonders vorteilhaft. Mit der Erfindung ist es auch möglich, eine so genannte Membranfilterpresse zu betreiben. Bei einer derartigen Membranfilterpresse ist jede zweite Kammerfilterplatte zusätzlich mit einer Membran (Anspruch 5) versehen, welche zum Ausstoß des Filterkuchens bei der Entleerung der Filterkammern dient.

Anspruch 6 betrifft schließlich eine Filterplattenanordnung bzw. ein Filterpaket aus er findungsmäßigen Kammerfilterplatten, bei welchen die Schraubenköpfe der den Stützring einer Filterplatte fixierenden Befestigungsschrauben am Stützring der jeweils benachbarten Filterplatte fest und damit stützend anliegen. Anspruch 10 bezieht sich auf ein Membranplatten-Filterpaket.

Anhand des nachfolgend beschriebenen Ausführungsbeispiels ist die Erfindung näher erläutert. Es zeigen:

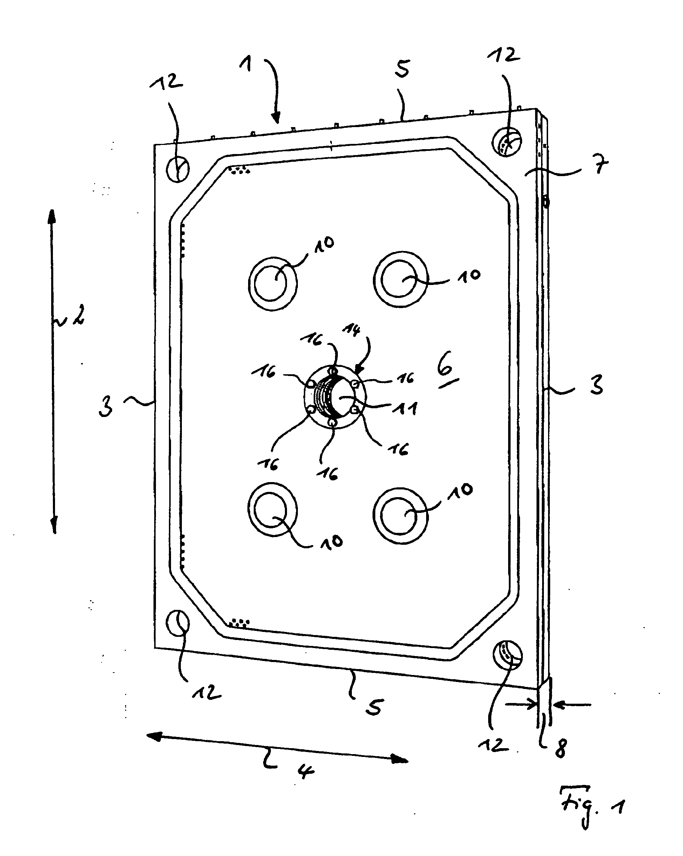

- Fig. 1: eine perspektivische Ansicht einer erfindungsmäßigen Kammerfilterplatte,
- Fig. 2: die Detailansicht der Trübeeinlauföffnung der Kammerfilterplatte aus Fig. 1,
- Fig. 3: eine erfindungsmäßige Befestigungsschraube,
- Fig. 4: eine Filterplattenanordnung mit einer Kammerfilterplatte und einer Memb- ranfilterplatte.

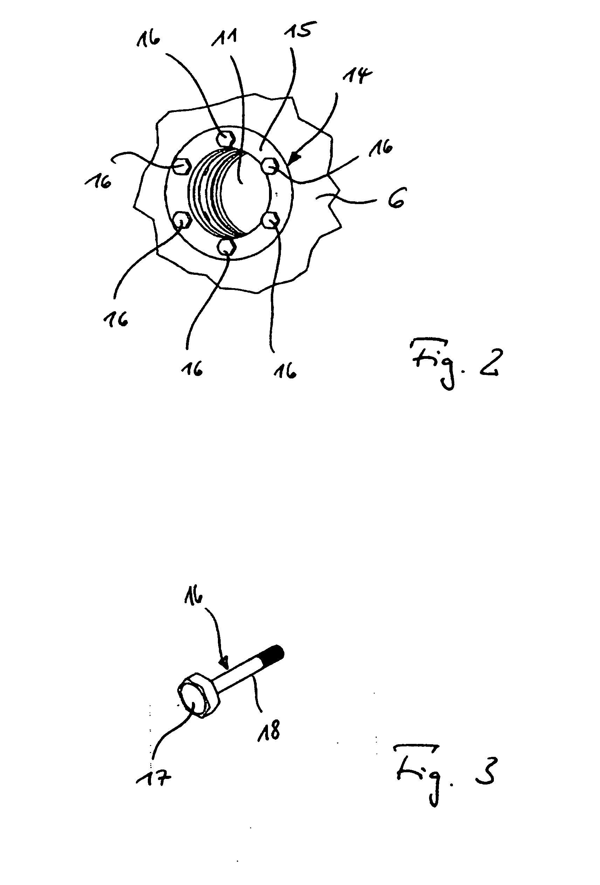

Die rechteckförmige Kammerfilterplatte 1 weist zwei parallele sich in Längsrichtung 2 erstreckende Längsseiten 3 und zwei ebenfalls parallele, in Querrichtung 4 rechtwinklig zu den Längsseiten 3 verlaufende Querseiten 5 auf. Der Plattenkörper der Kammerfilterplatte 1 besteht aus der Plattenoberfläche 6 und einem die Plattenoberfläche 6 säumenden Plattenrand 7. Der umlaufend um die Plattenoberfläche 6 verlaufende Plattenrand 7 weist eine höhere Dicke 8 auf als der Plattenkörper im Bereich der Plattenoberfläche 6. Dies bedeutet, dass die Plattenoberfläche 6 in der zur Längsrichtung 2 und zur Querrichtung 4 senkrecht verlaufenden Plattenaufreihrichtung 9 (Fig. 3) gegenüber dem Plattenrand 7 zurückspringt. Auf diese Weise schafft der Plattenrand 7 eine einseitig offene Filterkammer mit der Plattenoberfläche 6 als Kammerboden.

Auf der Plattenoberfläche 6 sind im Ausführungsbeispiel vier in Plattenaufreihrichtung 9 aus der Plattenoberfläche 6 vorspringende Stützkörper 10 angebracht. Im Montageendzustand, in welchem in Plattenaufreihrichtung 9 mehrere Kammerfilterplatten 1 nebeneinander angeordnet sind, liegen die Stützkörper 10 zweier einander benachbarter Kammerfilterplatten 1 aneinander an, um die Plattenoberflächen 6 gegen Druckverformung zu stabilisieren. Im Zentrum der Plattenoberfläche 6 ist ferner eine die Kammerfilterplatte 1 durchsetzende Trübeeinlaufbohrung 11 angeordnet. Die Eckbereiche des Plattenrandes 7 sind jeweils durchsetzt von Filtratablaufbohrungen 12.

Im Bereich der Trübeeinlaufbohrung 11 ist der Stützring 14 angeordnet. Der Stützring 14 flankiert die Trübeeinlaufbohrung 11 und flankiert sie mit seinem kreisförmigen umlaufenden Montageflansch 15. Der Montageflansch 15 ist im Ausführungsbeispiel von sechs Befestigungsschrauben 16 durchsetzt. Die Befestigungsschrauben 16 weisen einen in Montageendstellung auf der Plattenoberfläche 6 aufliegenden und in Plattenaufreihrichtung 9 von der Plattenoberfläche 6 abstehende Schraubenköpfe 17 auf. Schließlich weisen die Befestigungsschrauben 16 noch einen mit einem Schraubgewinde versehenen Schaft 18 auf. Mit dem Schaft 18 durchsetzen die Befestigungsschrauben 16 den Körper der Kammerfilterplatte 1.

Die Wirkungsweise ist folgende:

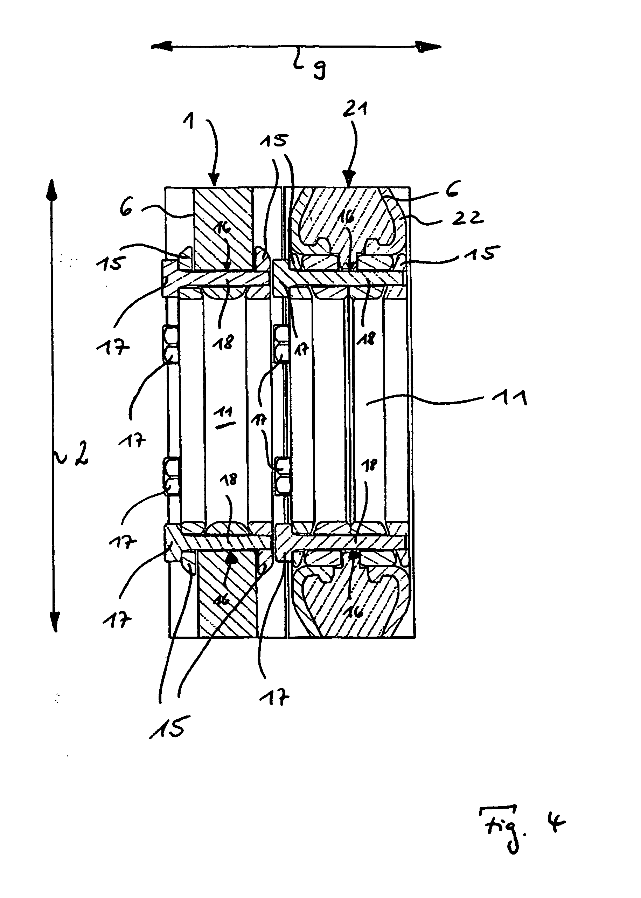

Ein Filterpaket besteht aus mehreren in Plattenaufreihrichtung 9 nebeneinander angeordneten Kammerfilterplatten 1. Es können auch jeweils eine Kammerfilterplatte 1 und eine Membranfilterplatte 21 nebeneinander angeordnet sein, wie dies im Ausführungsbeispiel gemäß Fig. 4 der Fall ist. Hier ist die in Fig. 4 rechts dargestellte Filterplatte eine Membranfilterplatte 21. Sie unterscheidet sich von der in Fig.4 links angeordneten Kammerfilterplatte 1 dadurch, dass an die Plattenoberfläche 6 beidseitig noch eine Membran 22 angelegt ist.

Die Befestigungsschrauben 16 durchsetzen mit ihren Schäften 18 jeweils den Körper der Kammerfilterplatte 1 bzw. der Membranfilterplatte 21 und halten auf beiden Seiten der Kammerfilterplatte 1 bzw. der Membranfilterplatte 21 jeweils einen Stützring 14 mit einem Montageflansch 15. Die Schraubenköpfe 17 der Befestigungsschrauben 16 stehen dabei in Plattenaufreihrichtung 9 so weit aus der Plattenoberfläche 6 ab, dass jeder Schraubenkopf 17 mit seiner der Plattenoberfläche 6 abgewandten Schraubenkopfoberseite am Montageflansch 15 des Stützrings der in Plattenaufreihrichtung 9 benachbarten Filterplatte 1,21 anliegt. Auf diese Weise stützen die Schraubenköpfe 17 der in Fig. 4 rechts gezeichneten Membranfilterplatte 21 den Körper der Membranfilterplatte 21 gegen den Stützring 14 der links benachbarten Kammerfilterplatte 1 ab. Die Schraubenköpfe 17 sind also zugleich als in Plattenaufreihrichtung 9 wirksame Vorsprünge zum Abstützen der Membranfilterplatte 21 im Bereich der Trübeeinlaufbohrung 11 wirksam.

### Bezugszeichenliste

- 1: Kammerfilterplatte
- 2: Längsrichtung
- 3: Längsseite
- 4: Querrichtung
- 5: Querseite
- 6: Plattenoberfläche
- 7: Plattenrand
- 8: Dicke
- 9: Plattenaufreihrichtung
- 10: Stützkörper
- 11: Trübeeinlaufbohrung
- 12: Filtratablaufbohrung
- 14: Stützring
- 15: Montageflansch
- 16: Befestigungsschraube
- 17: Schraubenkopf
- 18: Schaft
- 21: Membranfilterplatte
- 22: Membran

## Patentansprüche

1. Kammerfilterplatte (1) für eine Filterpresse
• mit einem gegenüber der Plattenoberfläche (6) verdickten, umlaufenden Plattenrand (7),
• mit mindestens einer Trübeeinlaufbohrung (11) der Plattenoberfläche (6) und
• mit einem den Rand der Trübeeinlaufbohrung (11) umfassenden Stützring (14),
• mit einem zur Plattenoberfläche (6) gleichebig verlaufenden Montageflansch (15) am Stützring (14) und
• mit mindestens drei im Abstand von jeweils 120° über den Montageflansch (15) verteilten Vorsprüngen, deren der Plattenoberfläche (6) abgewandte Deckflächen jeweils eine zur Plattenoberfläche (6) koplanare Abflachung aufweisen,
• wobei der Stützring (14) mit einer oder mehreren, den Montageflansch (15) durchsetzenden Befestigungsschrauben (16) an der Plattenoberfläche (6) fixiert ist,
**dadurch gekennzeichnet,**
**dass** die Befestigungsschrauben (16) als Kopfschrauben ausgebildet sind mit den Schraubenköpfen (17) als Vorsprüngen.

2. Kammerfilterplatte (1) nach Anspruch 1,
**dadurch gekennzeichnet,**
**dass** der Schraubenkopfdurchmesser kleiner oder gleich der Breite des Montageflansches (15) ist.

3. Kammerfilterplatte (1) nach Anspruch 1 oder 2,
**gekennzeichnet durch**
einen Metallring, insbesondere Stahlring, als Stützring (14).

4. Kammerfilterplatte (1) nach einem der Ansprüche 1 bis 3,
**dadurch gekennzeichnet,**
**dass** die Trübeeinlaufbohrung (11) im Mittelpunkt der Plattenoberfläche (6) angeordnet ist.

5. Kammefilterplatte (1) nach einem der vorhergehenden Ansprüche,
**gekennzeichnet durch**
eine an der Filterplatte angeordnete Membran (22) zur Bildung einer Membranfilterplatte (21).

6. Filterplattenanordnung mit mindestens zwei einander benachbarten Kammerfilterplatten (1, 21) nach einem der Ansprüche 1 bis 5,
**dadurch gekennzeichnet,**
**dass** die als Vorsprünge fungierenden Schraubenköpfe (17) am Stützring (14) der jeweils benachbarten Kammerfilterplatte (1, 21) anliegen zur Abstützung der Stützringe (14) aneinander.

7. Filterplattenanordnung nach Anspruch 6,
**dadurch gekennzeichnet,**
**dass** jeweils abwechselnd eine Kammerfilterplatte (1) und eine Membranfilterplatte (21) nebeneinander angeordnet sind.

## Claims

1. A compartment-type filter plate (1) for a filter press,
- having a peripheral plate edge (7) thickened as compared with the plate surface (6),
- having at least one sludge-liquor inlet hole (11) of the plate surface (6) and
- having a supporting ring (14) encompassing the edge of the sludge-liquor inlet hole (11),
- having an assembly flange (15), extending in the same plane as the plate surface (6), on the supporting ring (14), and
- having at least three projections, which are distributed over the assembly flange (15) at intervals of 120° in each case and whose top surfaces facing away from the plate surface (6) each include a flat part which is coplanar to the plate surface (6),
- the supporting ring (14) being fixed on the plate surface (6) with one or more fastening screws (16) passing through the assembly flange (15),
**characterized in that**
the fastening screws (16) are designed as cap screws, the screw caps (17) forming the projections.

2. The compartment-type filter plate (1) according to claim 1,
**characterized in that**
the diameter of the screw cap is smaller than, or equal to, the width of the assembly flange (15).

3. The compartment-type filter plate (1) according to claim 1 or 2,
**characterized by**
a metal ring, in particular a steel ring, as supporting ring (14).

4. The compartment-type filter plate (1) according to any of claims 1 to 3,
**characterized in that**
the sludge-liquor inlet hole (11) is arranged in the center of the plate surface (6).

5. The compartment-type filter plate (1) according to any of the preceding claims,
**characterized by**
a diaphragm (22) arranged on the filter plate, for forming a diaphragm filter plate (21).

6. A filter plate arrangement with at least two compartment-type filter plates (1, 21) according to any of claims 1 to 5, adjacent to each other
**characterized in that**
the screw caps (17) acting as projections abut on the supporting ring (14) of the respective adjacent compartment-type filter plate (1, 21), so that the supporting rings (14) support each other.

7. The filter plate arrangement according to claim 6,
**characterized in that**
a compartment-type filter plate (1) and a diaphragm filter plate (21) are in each case alternately arranged beside each other.

## Revendications

1. Plaque filtrante à chambres (1) pour un filtre-presse,
- ayant un bord de plaque périphérique (7), épaissi comparé à la surface de la plaque (6),
- ayant au moins un trou d'entrée du liquide surnageant (11) de la surface de la plaque (6) et
- ayant une bague d'appui (14) entourant le bord du trou d'entrée du liquide surnageant (11),
- ayant une bride de montage (15), s'étendant dans le même plan que la surface de la plaque (6), sur la bague d'appui (14), et
- ayant au moins trois saillies, qui sont distribuées sur la bride de montage (15) à des intervalles de 120° chacun et dont les faces supérieures à l'opposé de la surface de la plaque (6) comprennent chacune un aplatissement qui est coplanaire à la surface de la plaque (6),
- la bague d'appui (14) étant fixée sur la surface de la plaque (6) par une ou plusieurs vis de fixation (16) passant par la bride de montage (15),
**caractérisée en ce que**
les vis de fixation (16) sont conçues comme vis à têtes, les têtes de vis (17) formant les saillies.

2. Plaque filtrante à chambres (1) d'après la revendication 1,
**caractérisée en ce que**
le diamètre de la tête de vis est plus petit que, ou égal à, la largeur de la bride de montage (15).

3. Plaque filtrante à chambres (1) d'après la revendication 1 ou 2,
**caractérisée par**
une bague métallique, en particulier une bague en acier, comme bague d'appui (14).

4. Plaque filtrante à chambres (1) d'après l'une quelconque des revendications 1 à 3,
**caractérisée en ce que**
le trou d'entrée du liquide surnageant (11) est ménagé dans le centre de la surface de la plaque (6).

5. Plaque filtrante à chambres (1) d'après l'une quelconque des revendications précédentes,
**caractérisée par**
un diaphragme (22) ménagé sur la plaque filtrante, pour former une plaque filtrante à diaphragme (21).

6. Aménagement de plaques filtrantes avec au moins deux plaques filtrantes à chambres (1, 21) d'après l'une quelconque des revendications 1 à 5, adjacents l'une à l'autre,
**caractérisée en ce que**
les têtes de vis (17) faisant fonction de saillies prennent appui à la bague d'appui (14) de la plaque filtrante à chambre (1, 21) respective adjacente, de façon que les bagues d'appui (14) s'appuient l'une l'autre.

7. Aménagement de plaque filtrante d'après la revendication 6,
**caractérisée en ce que**
une plaque filtrante à chambres (1) et une plaque filtrante à diaphragme (21) sont ménagées à chaque fois alternativement l'une à côté de l'autre.
